# EUROPEAN PATENT APPLICATION

(11) **EP 2 682 577 A1**
(43) Date of publication of application: **08.01.2014**
(21) Application number: 11859861.4
(22) Date of filing: 28.02.2011
(51) Int. Cl.: F01N 3/08, F01N 3/10

(54) **EXHAUST GAS PURIFICATION DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: SUGAWARA, Kou, Kakegawa-shi, Shizuoka 437-1492 (JP); NAKAYAMA, Shigeki, Toyota-shi, Aichi-ken 471-8571 (JP); SOBUE, Yuichi, Toyota-shi, Aichi-ken 471-8571 (JP); NISHIOKA, Hiromasa, Toyota-shi, Aichi-ken 471-8571 (JP); IMAI, Daichi, Toyota-shi, Aichi-ken 471-8571 (JP)
(74) Representative: TBK
(86) International application number: PCT/JP2011/055161
(87) International publication number: WO 2012/117566

(57) **Abstract**

This exhaust gas purification device for an internal combustion engine is provided with a particulate filter (1) disposed in an engine exhaust system, and a catalytic device (3) disposed downstream of the particulate filter in the engine exhaust system. The catalytic device holds sulfuric acid as a sulfate and releases the product as SO₂.

## Description

### Technical Field

The present invention relates to an exhaust purification system of an internal combustion engine.

### Background Art

To suppress release of particulate which is contained in exhaust gas into the atmosphere, a particulate filter is arranged in an engine exhaust system to trap the particulate. The particulate which is trapped by the particulate filter increases the exhaust resistance of the particulate filter, and therefore before the exhaust resistance of the particulate filter rises to a set value or more, regeneration processing for burning off the trapped particulate is necessary.

The regeneration processing of a particulate filter feeds additional fuel into the exhaust gas, burns the additional fuel at the particulate filter or at the oxidation catalyst device at the immediate upstream side of the particulate filter, and utilizes the heat of combustion to raise the temperature of the particulate filter to the combustion temperature of the particulate of about 600°C.

Not only when making the additional fuel burn at the particulate filter, but also when making the additional fuel burn at the oxidation catalyst device at the immediate upstream side of the particulate filter, to suppress release into the atmosphere of additional fuel which slips through the oxidation catalyst device, it is preferable to make the particulate filter carry a precious metal catalyst using alumina as a carrier so as to enable the additional fuel to be burned.

If providing an alumina carrier on a particulate filter in this way, the SO₂ in the exhaust gas is adsorbed at the alumina carrier. The SO₂ which is adsorbed at the alumina carrier is released when the particulate filter is made high in temperature at the time of regeneration processing. If the SO₂ is oxidized by the precious metal catalyst of the particulate filter and thus becomes SO₃, this will react with the moisture in the exhaust gas and become sulfuric acid. Sulfuric acid is low in boiling point and immediately forms mist-like white fumes which can be seen, and therefore if they are released as is into the atmosphere, the vehicle will be seen as one which releases white fumes and the commodity value of the vehicle will fall.

It has been proposed, in S poisoning reversal processing which releases the SO_{X}, which is stored in the NO_{X} storage catalyst device, as SO₂, to make the released SO₂ react with water and liquefy as sulfuric acid and to hold this sulfuric acid mist as iron sulfide at a mist catch plate and thereby suppress release into the atmosphere (for example, see PLT 1).

### Citations List

### Patent Literature

PLT 1: Japanese Patent Publication No. 2007-218108A
PLT 2: Japanese Patent Publication No. 2009-138667A

### Summary of Invention

### Technical Problem

If arranging a mist catch plate like the one disclosed in PLT 1 at the downstream side of a particulate filter, it is possible to sufficiently suppress release into the atmosphere of sulfuric acid fumes which are generated at the time of regeneration processing of a particulate filter.

However, such a mist catch plate has to be periodically replaced. Each time, the vehicle has to be taken to a repair factory.

Therefore, an object of the present invention is to provide an exhaust purification system of an internal combustion engine which does not require a mist catch plate, which requires periodic replacement, and which suppresses release into the atmosphere of sulfuric acid fumes which are generated at the time of regeneration processing of a particulate filter.

### Solution to Problem

The exhaust purification system of an internal combustion engine according to the present invention as set forth in claim 1 is characterized by comprising a particulate filter which is arranged in an engine exhaust system and a catalyst device which is arranged at a downstream side of the particulate filter of the engine exhaust system, the catalyst device holding sulfuric acid as a sulfuric acid salt and releasing it as SO₂.

The exhaust purification system of an internal combustion engine according to the present invention as set forth in claim 2 provides the exhaust purification system of an internal combustion engine as set forth in claim 1 characterized by making the sulfuric acid salt which is held at the catalyst device be released as SO₂ by heat decomposition.

The exhaust purification system of an internal combustion engine according to the present invention as set forth in claim 3 provides the exhaust purification system of an internal combustion engine as set forth in claim 1 characterized by making the sulfuric acid salt which is held at the catalyst device be released as SO₂ by lowering the oxygen concentration in the catalyst device.

The exhaust purification system of an internal combustion engine according to the present invention as set forth in claim 4 provides the exhaust purification system of an internal combustion engine as set forth in any one of claims 1 to 3 characterized in that the catalyst device is comprised of a substrate on which zirconium oxide or cerium oxide is coated.

### Advantageous Effects of Invention

According to the exhaust purification system of an internal combustion engine according to the present invention as set forth in claim 1, there are provided a particulate filter which is arranged in an engine exhaust system and a catalyst device which is arranged at a downstream side of the particulate filter of the engine exhaust system, and the catalyst device is designed to hold sulfuric acid as a sulfuric acid salt and release it as SO₂. Due to this, even if sulfuric acid fumes are generated at the time of regeneration processing in the particulate filter, the sulfuric acid fumes are held as a sulfuric acid salt in the downstream side catalyst device and are released as SO₂, and therefore there is no need for a mist catch plate which requires periodic replacement and it is possible to suppress the release of sulfuric acid fumes into the atmosphere at the time of regeneration processing of a particulate filter.

According to the exhaust purification system of an internal combustion engine according to the present invention as set forth in claim 2, based on the exhaust purification system of an internal combustion engine as set forth in claim 1, the sulfuric acid salt which was held at the catalyst device can be easily released as SO₂ by heat decomposition.

According to the exhaust purification system of an internal combustion engine according to the present invention as set forth in claim 3, based on the exhaust purification system of an internal combustion engine as set forth in claim 1, the sulfuric acid salt which was held at the catalyst device can be easily released as SO₂ by lowering the oxygen concentration in the catalyst device.

According to the exhaust purification system of an internal combustion engine according to the present invention as set forth in claim 4, based on the exhaust purification system of an internal combustion engine as set forth in any one of claims 1 to 3, the catalyst device is comprised of a substrate on which zirconium oxide or cerium oxide is coated, and a sulfuric acid salt which was generated by reaction with the zirconium oxide or cerium oxide can be easily released as SO₂ by heat decomposition or by lowering the oxygen concentration.

### Brief Description of Drawings

FIG. 1 is a schematic view which shows an exhaust purification system of an internal combustion engine according to the present invention.
FIG. 2 is a first flowchart for suppressing the release of fumes at the time of regeneration processing of a particulate filter.
FIG. 3 is a map for estimating an amount of SO₂ adsorption AS at a particulate filter per unit time.
FIG. 4 is a map for estimating an amount of SO₂ release BS from a catalyst device per unit time.
FIG. 5 is a second flowchart for suppressing the release of fumes at the time of regeneration processing of a particulate filter.

### Description of Embodiments

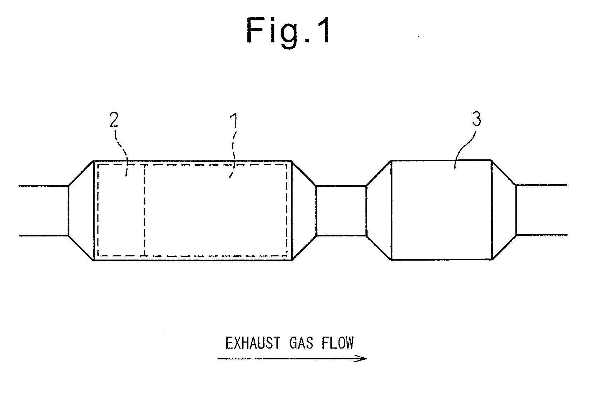

FIG. 1 is a schematic view which shows an exhaust purification system of an internal combustion engine according to the present embodiment. The internal combustion engine is for example a diesel engine. In the figure, 1 is a particulate filter for trapping particulate which is contained in exhaust gas. 2 is an oxidation catalyst device which is arranged at an immediate upstream side of the particulate filter 1, while 3 is a catalyst device which is arranged at a downstream side of the particulate filter 1.

The particulate filter 1 is a wall flow type which forms a honeycomb structure which is for example formed from a porous material such as cordierite and has a large number of axial direction spaces which are formed by subdivision by partitions which extend in the axial direction. In two adjoining axial direction spaces, one is closed by a plug at an exhaust downstream side, while the other is closed at the exhaust upstream side. In this way, one of two adjoining axial direction spaces becomes an inflow passage for exhaust gas and the other becomes an outflow passage. The exhaust gas is designed to pass through the partitions. The particulate in exhaust gas is extremely small compared with the size of the pores of the partitions, but collide with and are trapped by the exhaust upstream side surfaces of the partitions and the pore surfaces in the partitions. In this way, the partitions function as walls which trap the particulate.

The particulate which is trapped by the particulate filter 1 makes the exhaust resistance of the particulate filter 1 increase, and therefore before the exhaust resistance of the particulate filter 1 rises to a set value or more and thus the engine output greatly falls, regeneration processing for burning off the trapped particulate must be carried out.

The regeneration processing of the particulate filter 1 is performed by feeding additional fuel to the cylinders from the fuel injectors in the latter half of the expansion stroke or exhaust stroke or feeding additional fuel by a fuel feed device (not shown) which is arranged in the exhaust passage at the exhaust upstream side of the oxidation catalyst device 2, making this additional fuel burn off in the oxidation catalyst device 2, and utilizing this heat of combustion to raise the particulate filter 1 to the combustion temperature of the particulate, that is, about 600°C.

The amount of additional fuel per unit time which flows into the oxidation catalyst device 2 is controlled based on the exhaust gas amount and the exhaust gas temperature which changes due to the current engine operating state (engine load and engine speed). The larger the exhaust gas amount, the greater the amount of additional fuel per unit time, while the higher the exhaust gas temperature, the smaller the amount of additional fuel per unit time. Due to this, the temperature of the exhaust gas which flows into the particulate filter 1 is controlled to about 600°C. It is also possible to measure the temperature of the exhaust gas which flows into the particulate filter 1 and perform feedback control on the amount of additional fuel per unit time which flows into the oxidation catalyst device so that this measurement temperature becomes about 600°C. If in this way the temperature of the exhaust gas which flows to the particulate filter 1 becomes about 600°C, it is possible to make the particulate which is trapped at the particulate filter 1 burn from the exhaust upstream side of the particulate filter 1 toward the exhaust downstream side and possible to easily make the trapped particulate completely burn.

Further, even if the oxidation catalyst device 2 is omitted, if the particulate filter 1 carries platinum or another precious metal catalyst, it is possible to make the additional fuel which was controlled in amount in the same way as above burn at the particulate filter 1 and use this heat of combustion to raise the particulate filter 1 to about 600°C to perform the regeneration processing. In this case, the precious metal catalyst is carried on the exhaust upstream side surfaces of the partitions of the particulate filter 1 using alumina etc. as a carrier. Further, even when an oxidation catalyst device 2 is provided, to suppress the release into the atmosphere of the additional fuel which slips through the oxidation catalyst device 2, it is desirable to make the particulate filter 1 carry a precious metal catalyst using alumina etc. as a carrier so as to make the additional fuel burn.

If, in this way, the particulate filter 1 is provided with an alumina carrier, the SO₂ in the exhaust gas is adsorbed on the alumina carrier. The SO₂ which was adsorbed on the alumina carrier is released if the particulate filter reaches a high temperature such as 600°C at the time of the regeneration processing. Substantially all of the released SO₂ is oxidized by the precious metal catalyst of the particulate filter 1 to become SO₃. If becoming SO₃ in this way, this reacts with the moisture in the exhaust gas to become sulfuric acid. Sulfuric acid is low in boiling point and immediately forms mist-like fumes which can be seen if left untreated and released into the atmosphere, and therefore the commodity value of the vehicle falls.

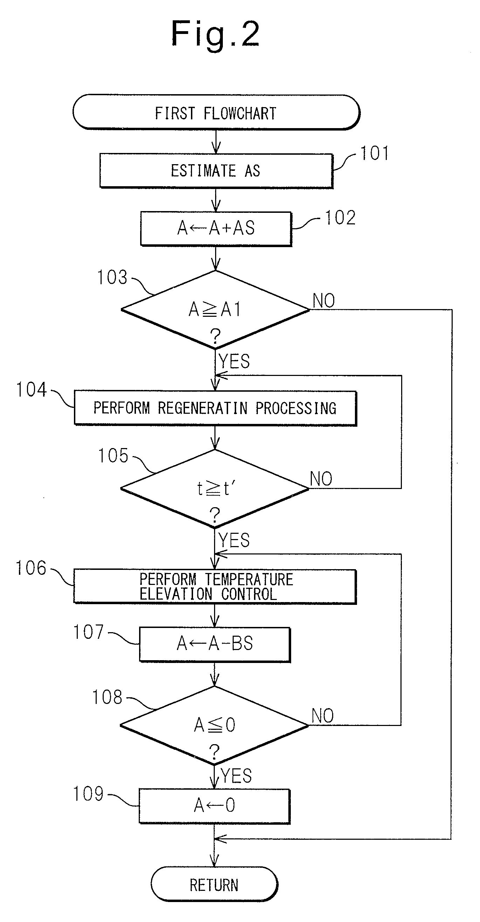

To suppress the release into the atmosphere of the sulfuric acid fumes which are generated at the time of regeneration processing of the particulate filter 1, an exhaust purification system according to the present invention arranges a catalyst device 3 at the immediate downstream side of the particulate filter and controls the feed of additional fuel at the time of regeneration processing by an electronic control unit (digital computer) in accordance with the first flowchart which is shown in FIG. 2.

The catalyst device 3 is comprised of a honeycomblike substrate on the surface of which zirconium oxide (ZrO₂) or cerium oxide (CeO₂ or Ce₂O₃) or another catalyst which can hold sulfuric acid as a sulfuric acid salt is coated. In particular, a precious metal catalyst which has an oxidation function is not carried.

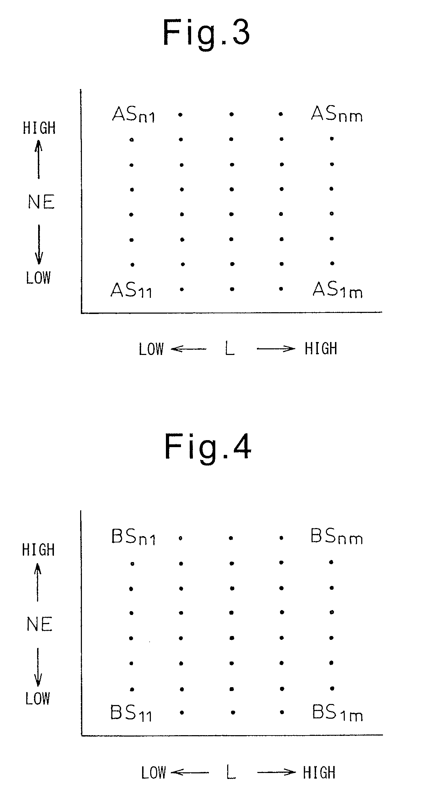

The first flowchart of FIG. 2 will be explained below. First, at step 101, the amount of SO₂ adsorption AS which is adsorbed per unit time at the particulate filter 1 in the current engine operating state is estimated by, for example, using the map which is shown in FIG. 3. The map shown in FIG. 3 is set with the amount of SO₂ adsorption AS to the particulate filter 1 per unit time for each engine operating state (combination of engine load L and engine speed NE) found experimentally. The SO₂ in the exhaust gas is mainly generated by oxidation of the sulfur contained in the fuel. The greater the amount of fuel injection in the engine operating state, the greater the amount of SO₂ adsorption AS per unit time.

Next, at step 102, the amount of SO₂ adsorption AS is cumulatively added to calculate the current amount of SO₂ adsorption A of the particulate filter 1. At step 103, it is judged if the current amount of SO₂ adsorption A of the particulate filter 1 has reached a set amount A1.

When the judgment at step 103 is negative, the routine ends as is, but when the current amount of SO₂ adsorption A of the particulate filter 1 has reached the set amount A1, the judgment as step 103 is affirmative and, at step 104, regeneration processing of the particulate filter 1 is performed.

At this time, the trapped amount of particulate of the particulate filter 1 is prevented from increasing the exhaust resistance of the particulate filter 1 to a set value or more. On the other hand, when the particulate filter reaches a high temperature (about 600°C) for the regeneration processing and the set amount A1 of SO₂ is totally released from the particulate filter 1, the released SO₂ becomes sulfuric acid as explained above. The set amount A1 is set so that all of this can be held at the catalyst device 3 as a sulfuric acid salt. That is, the greater the amount of sulfuric acid which the catalyst device 3 can hold, the greater the set amount A1 can be set. However, when the amount of SO₂ adsorption A of the particulate filter 1 reaches the set amount A1, the trapped amount of particulate of the particulate filter 1 has to be prevented from increasing exhaust resistance of the particulate filter 1 to a set value or more.

The regeneration processing of step 104, as explained above, feeds additional fuel to maintain the particulate filter 1 at about 600°C. At step 105, it is judged if the duration "t" of the regeneration processing has reached the time t' required for burning off all of the trapped particulate at the time of start of regeneration processing (the greater the set amount A1 of the SO₂ adsorption amount A, the greater the amount of trapped particulate at the time of start of regeneration becomes, and therefore the required time t' becomes longer). The regeneration processing is performed until this judgment becomes affirmative. If the judgment of step 105 is affirmative and the regeneration processing is completed, at step 106, temperature elevation control of the catalyst device 3 is performed.

As explained above, during the regeneration processing for burning off the trapped particulate of the particulate filter 1, the set amount A1 of SO₂ is released and becomes sulfuric acid, but substantially all is held at the catalyst device 2 as a sulfuric acid salt, ant therefore release of fumes of sulfuric acid into the atmosphere can be sufficiently suppressed.

If the catalyst of the catalyst device 2 is zirconium oxide (ZrO₂), as the sulfuric acid salt, zirconium sulfate Zr(SO₄)₂ is formed. The temperature elevation control of step 106 is designed to increase the amount of additional fuel per unit time used for the regeneration processing of the particulate filter 1 in the different engine operating states so that exhaust gas of about 700°C flows into the catalyst device 3. Due to this, the zirconium sulfate Zr(SO₄)₂ is broken down by heat as follows:

Zr (SO₄)₂→ZrO₂+2SO₂+O₂

The catalyst device 3 does not have an oxidation function. The SO₂ which is formed at this time is not oxidized to SO₃ which is easily oxidized to sulfuric acid. The SO₂ which is released from the particulate filter 1 can be released into the atmosphere not as sulfuric acid but finally as SO₂. In this way, the zirconium oxide (ZrO₂) reacts with sulfuric acid to generate a sulfuric acid salt at the temperature of the regeneration processing of the particulate filter 1, that is, about 600°C, or less. If becoming about 700°C or more, the sulfuric acid salt is broken down by heat and SO₂ is released.

Further, if the catalyst of the catalyst device 2 is cerium oxide (CeO₂), as the sulfuric acid salt, cerium sulfate Ce(SO₄)₂ is formed. At this time, due to the temperature elevation control of step 106, the cerium sulfate Ce(SO₄)₂ is broken down by heat as follows:

Ce (SO₄)₂→CeO₂+2SO₂+O₂

Due to this, in the same way, the SO₂ which is released from the particulate filter 1 can be released into the atmosphere not as sulfuric acid but finally as SO₂. In this way, the cerium oxide (CeO₂) reacts with sulfuric acid to generate a sulfuric acid salt at the temperature of the regeneration processing of the particulate filter 1, that is, about 600°C, or less. If becoming about 700°C or more, the sulfuric acid salt is broken down by heat and SO₂ is released.

At step 107, BS is the amount of SO₂ release which is released per unit time from the catalyst device 3 in the current engine operating state and changes along with the engine operating state. It is estimated by using the map which is shown in FIG. 4 etc. The map which is shown in FIG. 4 is set with the amount of SO₂ release BS from the catalyst device 3 per unit time for each engine operating state (combination of engine load L and engine speed NE) found experimentally. Here, it is assumed that the catalyst device 3 is held at 700°C. The greater the exhaust gas amount, the greater the amount of SO₂ release BS per unit time. Further, the lower the oxygen concentration in the exhaust gas, the greater the amount of SO₂ release per unit time. The oxygen concentration in the exhaust gas related to the amount of SO₂ release BS is the oxygen concentration in the exhaust gas which flows into the catalyst device 3. In the map which is shown in FIG. 4, consideration is given so that compared with the oxygen concentration in the exhaust gas of the combustion air-fuel ratio of the current engine operating state, the concentration becomes further lower, since additional fuel is burned at the oxidation catalyst device 2 and particulate filter 1.

At step 107, the previous SO₂ holding amount A of the catalyst device 3 is reduced by the amount of SO₂ release BS which is released per unit time from the catalyst device 3 in the current engine operating state so as to calculate the current SO₂ holding amount A of the catalyst device 3. Here, the initial SO₂ holding amount A of the catalyst device 3 can be a set amount A1 comprised of the SO₂ holding amount at the time of start of regeneration processing of the particulate filter 1 assuming that all of the SO₂ which is released from the particulate filter 1 is held as a sulfuric acid salt in the catalyst device 3.

At step 108, it is judged if the current SO₂ holding amount A of the catalyst device 3 has become 0. The temperature elevation control of step 106 is performed until this judgment becomes affirmative. On the other hand, when the judgment at step 108 is affirmative and all of the sulfuric acid salt of the catalyst device 3 is broken down by heat and all of the SO₂ is released, at step 109, A is reset to 0 and the routine is ended. In preparation for the next regeneration processing of the particulate filter 1, the catalyst device 3 is set to be able to hold the set amount A1 of SO₂ as a sulfuric acid salt.

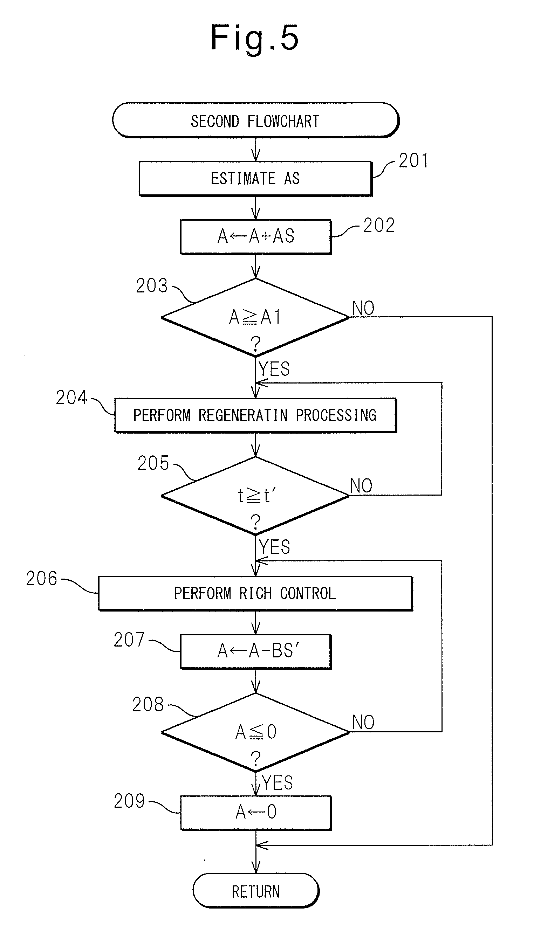

FIG. 5 is a second flowchart for controlling the release of fumes at the time of regeneration processing of the particulate filter 1. Only the differences from the first flowchart will be explained below. In the present flowchart, at step 206, to make the sulfuric acid salt which is held at the catalyst device 3 release SO₂, not temperature elevation control, but rich control is performed. The rich control feeds additional fuel to the cylinders or the exhaust passage at the upstream side of the oxidation catalyst device 2 (by method similar to regeneration processing of particulate filter 1) so that the air-fuel ratio of the exhaust gas reaches the desired rich air-fuel ratio (or stoichiometric air-fuel ratio) with respect to the combustion air-fuel ratio of the current engine operating state, and sufficiently lowers the oxygen concentration in the exhaust gas after passing through the oxidation catalyst device 2 and particulate filter 1.

If, in this way, the oxygen concentration in the catalyst device 3 falls, the zirconium sulfate Zr(SO₄)₂ or cerium sulfate Ce(SO₄)₂ of the catalyst device 3 tries to release oxygen, is easily broken down in the same way as the above heat decomposition, and releases SO₂.

Zr (SO₄)₂→ZrO₂+2SO₂+O₂

Ce (SO₄)₂→CeO₂+2SO₂+O₂

At step 207, BS' is the amount of SO₂ release which is released per unit time from the catalyst device 3 in the current engine operating state. It changes along with the engine operating state and is estimated by, for example, using a map. The map is set with the amount of SO₂ release BS' from the catalyst device 3 per unit time for each engine operating state (combination of engine load L and engine speed NE) found experimentally. Here, it is assumed that the air-fuel ratio of the exhaust gas flowing into the catalyst device 3 is a desired rich air-fuel ratio by the additional fuel. The greater the exhaust gas amount, the greater the amount of SO₂ release BS' per unit time, while the higher the exhaust gas temperature, the greater the amount of SO₂ release BS' per unit time. The exhaust gas temperature related to the amount of SO₂ release BS' is the temperature of the exhaust gas which flows into the catalyst device 3. In the above-mentioned map, consideration is given so that compared with the temperature of the exhaust gas which is exhausted from the cylinders in the current engine operating state, the temperature becomes further higher, since additional fuel is burned at the oxidation catalyst device 2 and particulate filter 1.

At step 207, the previous SO₂ holding amount A of the catalyst device 3 is reduced by the amount of SO₂ release BS' which is released per unit time from the catalyst device 3 in the current engine operating state so as to calculate the current SO₂ holding amount A of the catalyst device 3. Here, the initial SO₂ holding amount A of the catalyst device 3, in the same way as the first flowchart, can be a set amount A1 comprised of the SO₂ holding amount at the time of start of regeneration processing of the particulate filter 1 assuming that all of the SO₂ which is released from the particulate filter 1 is held as a sulfuric acid salt in the catalyst device 3.

At step 208, it is judged if the current SO₂ holding amount A of the catalyst device 3 has become 0. The rich control of step 206 is performed until this judgment becomes affirmative. On the other hand, if the judgment of step 208 is affirmative and all of the sulfuric acid salts of the catalyst device 3 is broken down and all of the SO₂ is released, at step 209, A is reset to 0 and the routine is ended. In preparation for the next regeneration processing of the particulate filter 1, the catalyst device 3 is set to be able to hold the set amount A1 of SO₂ as a sulfuric acid salt.

### Reference Signs List

- 1: particulate filter
- 2: oxidation catalyst device
- 3: catalyst device

## Claims

1. An exhaust purification system of an internal combustion engine, **characterized by** comprising a particulate filter which is arranged in an engine exhaust system and a catalyst device which is arranged at a downstream side of the particulate filter of said engine exhaust system, said catalyst device holding sulfuric acid as a sulfuric acid salt and releasing it as SO₂.

2. The exhaust purification system of an internal combustion engine according to claim 1 **characterized by** making the sulfuric acid salt which is held at said catalyst device be released as SO₂ by heat decomposition.

3. The exhaust purification system of an internal combustion engine according to claim 1 **characterized by** making the sulfuric acid salt which is held at said catalyst device be released as SO₂ by lowering the oxygen concentration in said catalyst device.

4. The exhaust purification system of an internal combustion engine according to any one of claims 1 to 3 **characterized in that** said catalyst device is comprised of a substrate on which zirconium oxide or cerium oxide is coated.
